(19) Europäisches Patentamt
European Patent Office
Office européen des brevets

(11) **EP 4 227 025 B1**

(12) **EUROPEAN PATENT SPECIFICATION**

(45) Date of publication and mention
of the grant of the patent:
**08.04.2026 Bulletin 2026/15**

(21) Application number: **22201968.9**

(22) Date of filing: **17.10.2022**

(51) International Patent Classification (IPC):
**B22F 9/04** *(2006.01)*   **C22C 1/02** *(2006.01)*
**C22C 33/02** *(2006.01)*   **B22D 1/00** *(2006.01)*
**C22C 1/04** *(2023.01)*   **C22C 38/14** *(2006.01)*
**C22C 14/00** *(2006.01)*   **C22C 33/04** *(2006.01)*
**C22C 30/00** *(2006.01)*   **B22D 7/00** *(2006.01)*
**B22D 21/00** *(2006.01)*   **C01B 3/00** *(2026.01)*

(52) Cooperative Patent Classification (CPC):
(C-Sets available)
**B22F 9/04; B22D 1/002; B22D 7/005;
B22D 21/005; C01B 3/0036; C22C 1/02;
C22C 1/0458; C22C 14/00; C22C 30/00;
C22C 33/0278; C22C 33/04; C22C 38/14;**
B22F 2998/10; Y02E 60/32       (Cont.)

(54) **METHOD FOR PRODUCING TIFE-BASED ALLOYS USEFUL FOR HYDROGEN STORAGE
APPLICATIONS**

VERFAHREN ZUR HERSTELLUNG VON LEGIERUNGEN AUF TIFE-BASIS FÜR
WASSERSTOFFSPEICHERANWENDUNGEN

PROCÉDÉ DE PRODUCTION D'ALLIAGES À BASE DE TIFE UTILES POUR DES APPLICATIONS
DE STOCKAGE D'HYDROGÈNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.02.2022 EP 22156710**

(43) Date of publication of application:
**16.08.2023 Bulletin 2023/33**

(73) Proprietor: **Helmholtz-Zentrum hereon GmbH
21502 Geesthacht (DE)**

(72) Inventors:
• **PISTIDDA, Claudio
21502 Geesthacht (DE)**
• **SHANG, Yuanyuan
21502 Geesthacht (DE)**
• **TAUBE, Klaus
22549 Hamburg (DE)**
• **KLASSEN, Thomas
21465 Wentorf (DE)**
• **DORNHEIM, Martin
21391 Reppenstedt (DE)**

(74) Representative: **Uexküll & Stolberg
Partnerschaft von
Patent- und Rechtsanwälten mbB
Beselerstraße 4
22607 Hamburg (DE)**

(56) References cited:
**CN-B- 105 603 257      JP-A- S56 136 957
JP-A- S59 219 446**

• **PATEL ABHISHEK KUMAR ET AL: "Effect of
annealing on microstructure and hydrogenation
properties of TiFe + X wt% Zr (X = 4, 8)",
INTERNATIONAL JOURNAL OF HYDROGEN
ENERGY, ELSEVIER, AMSTERDAM, NL, vol. 43,
no. 12, 2 March 2018 (2018-03-02), pages 6238 -
6243, XP085359590, ISSN: 0360-3199, DOI:
10.1016/J.IJHYDENE.2018.02.029**

**(Cont. next page)**

(52) Cooperative Patent Classification (CPC): (Cont.)

C-Sets
B22F 2998/10, B22D 7/005, B22F 9/04, B22F 1/145

**Description**

FIELD OF THE INVENTION

The present invention relates to a method for producing TiFe-based alloys which are useful for hydrogen storage applications.

BACKGROUND OF THE INVENTION

Hydrogen is increasingly coming into focus in politics and industry as an energy carrier in fuel cells to promote renewable energies. The hydrogen required as fuel is usually provided from a pressurized tank, as this allows hydrogen to be made available over the entire operating temperature range. However, these pressure tanks are comparatively voluminous, so that the range of mobile applications such as the operation of a motor vehicle is restricted by the limited storage space available. It is known that hydrogen storage tanks based on metal hydrides, so-called metal hydride storage tanks, can be formed that require much less space with the same capacity.

Metal hydrides chemically store hydrogen by binding and releasing it under appropriate temperatures and hydrogen pressure conditions. For an industrial application, the technical efforts and costs required for the integration of such storage systems into energy supply systems are of critical importance. Room-temperature forming hydrides, such as TiFe-type alloys, which are able to absorb and desorb hydrogen at relatively low temperature (below 100°C) and gas pressure (below 10 MPa), are suitable for this purpose.

The use of the TiFe intermetallic for hydrogen storage purposes was reported for the first time by J. Reilly and R. Wiswall in 1974; *see* J.J. Reilly and R.H. Wiswall "Formation and properties of iron titanium hydride", Inorganic Chemistry Vol. 13, pages 218-222 (1974).

Titanium and iron form two stable intermetallic compounds: TiFe and $TiFe_2$. The TiFe alloy has good thermodynamic properties and good hydrogen storage capacities (~1.8 wt.%) at near-ambient conditions. The intermetallic compound TiFe reacts directly with hydrogen to form, in succession, hydrides of the approximate composition TiFeH and $TiFeH_2$. TiFe crystallizes in the CsCl-type cubic structure (space group *Pm-3m*). Upon hydrogenation, Pressure Composition-Isotherms (PCI) are characterized by two subsequent plateau pressures related to the consecutive formation of the monohydride, β-TiFeH (orthorhombic, space group $P222_1$), and the dihydride, γ-$TiFeH_2$ (orthorhombic, space group *Cmmm*), where hydrogen occupies interstices in the metal lattice.

PCI properties can be modified by partial substitution e.g. Mn or Ni for Fe; *see* G. Sandrock "A panoramic overview of hydrogen storage alloys from a gas reaction point of view", Journal of Alloys and Compounds Vol. 293-295 (1999), pages 877-888. The development of TiFe alloys for industrial applications so far aims at achieving the highest possible storage capacity exploitable for stationary storage.

The TiFe-based hydrogen storage alloys can be prepared by various methods, based on melting the constituents, their mechanical alloying, or sintering. Other potentially beneficial methods of TiFe preparation include direct reduction of cheap and available ilmenite, $TiFeO_3$, by the usage of metal-thermic routes, sometimes in combination with the reduction in gaseous $H_2$, or electrochemically. On an industrial level, TiFe based alloys are obtained through high-temperature melting of industrial grade Fe (ASTM 1005) having a chemical composition (mass fraction, wt.%) of C ≤ 0.06; Mn ≤ 0.35; P ≤ 0.040, S ≤ 0.050, and Grade 1 titanium (ASTM B265) having a chemical composition (mass fraction, wt.%) of C ≤ 0.08; O ≤ 0.18; H ≤ 0.015, Fe ≤ 0.20 followed by a prolonged homogenization treatment; see A.K. Patel et al. "Effect of annealing on microstructure and hydrogenation properties of TiFe + X wt% Zr (X = 4, 8)" International Journal of Hydrogen Energy Vol. 43, pages 6238-6243.

JP S56-136957 A discloses a method for producing TiFe-based alloys which are useful for hydrogen storage applications using carbon steels having a carbon content from about 0.05 wt.% to about 2.1 wt.% and pristine titanium material. As will be shown below, the activation of the so-produced material for hydrogen absorption is improvable.

P.A. Kumar et al. « effect of annealing on microstructure and hydrogenation properties of TiFe + X wt.% Zr (X = 4, 8)" International Journal of Hydrogen Energy, Vol. 43, No. 12 (2018), pages 6238-6243 likewise discloses a method for producing TiFe-based alloys which are useful for hydrogen storage applications using iron and titanium having an oxygen content of up to about 0.35 wt.%.

Due to the production costs associated to the use of high purity titanium and industrial grade Fe, a more economic method for producing TiFe-based alloys which are useful for hydrogen storage applications is desired. Furthermore, it would be desirable to provide TiFe-based having improved activation.

SUMMARY OF THE INVENTION

In one aspect, the present invention relates to a method for producing TiFe-based alloys which are useful for hydrogen storage applications according to claim 1.

In an embodiment of the invention, the austenitic stainless steel is chosen from the AISI 300 series. In another embodiment of the invention, the austenitic stainless steel is chosen form the AISI 300 series. 300 series stainless steels are iron-based with high contents of nickel, meaning its nickel alloy amounts to at least 8% or more. The austenitic stainless steel has an iron content of at most 85 wt.%, a nickel content from about 5 wt.% to about 15 wt.% and a chromium content of about 10 wt.% to about 20 wt.%. Suitable austenitic stainless steels include AISI grades 301, 304, 304L, 303, 321, 316, 316L and 316Ti.

The production of steel, made into stainless steel by the addition of special elements such as chromium (Cr), nickel (Ni) and molybdenum (Mo), has been growing worldwide for decades. With the increase of production, the amount of stainless steel scrap has also increased. Thus, according to another embodiment of the invention, the stainless steel chosen from the AISI 300 series may be stainless steel scrap. In fact, for environmental reasons, use of stainless steel scrap is preferred.

The so obtained TiFe-based alloy ingots may be further processed by subsequently milling them to form pulverized TiFe-based alloys which are useful for hydrogen storage applications.

As shown hereinafter, it is possible to obtain TiFe-based alloys possessing excellent hydrogen storage properties comparable to those of pristine TiFe alloys, when applying method according to the present invention. This is surprising, as the introduction of oxygen into TiFe-based alloys has been considered to decrease reversible hydrogen absorption capacity; *see* M. Wafeeq et al. "Influence of oxygen introduced in TiFe-based hydride forming alloy on its morphology, structural and hydrogen sorption properties", International Journal of Hydrogen Energy, Vol. 37 (20212), pages 18155-18162.

DETAILED DESCRIPTION OF THE INVENTION

According to an embodiment of the invention, the the austenitic stainless steel is chosen from the AISI 300 series according to the classification of Carbon and Low-Alloy Steels of the American Iron and Steel Institute (AISI) having an iron content of at most 85 wt.%, a nickel content from about 5 wt.% to about 15 wt.% and a chromium content of about 10 wt.% to about 20 wt.%.

In another embodiment of the invention, the austenitic stainless steel and/or the ferritic stainless steel is used as a blend with carbon steel, preferably carbon steel scrap, wherein the total iron content in the blend of austenitic stainless steel and/or the ferritic stainless steel with carbon steel is lower than 97 wt.%, preferably lower than 95 wt.%, more preferably lower than 90 wt.%, such as lower than 85 wt.% or lower than 75 wt.%, based on the total weight of the blend.

As a group, carbon steels are by far the most frequently used steels. More than 85% of the steel produced and shipped in the United States is carbon steel. Due to its good availability, use of carbon steel having a carbon content from about 0.05 wt.% to about 2.1 wt.%, preferably from about 0.1 wt.% to about 0.8 wt.%, more preferably from about 0.3 t.% to about 0.6 wt.% is much more economic than the use of high purity industrial grade Fe, such as medium carbon scrap steel grades, e.g. C45 scrap steel, are selected for the blend.

The carbon steel may be steel scrap having a carbon content of from about 0.3 wt.% to about 0.6 wt.% and meeting the further criteria laid down in the descriptions of EU-27 Steel Scrap Specification or equivalent international specifications.

According to an embodiment of the present invention, the titanium employed can be Grade 1, Grade 2 or Grade 3 titanium according to the definition of ASTM B265. ASTM B 265 Grade 1 titanium has the following contents of chemical elements: $N \leq 0.03$; $C \leq 0.08$; $H \leq 0.015$; $Fe \leq 0.20$; $O \leq 0.18$; ASTM B 265 Grade 2 titanium has the following contents of chemical elements: $N \leq 0.03$; $C \leq 0.08$; $H \leq 0.015$; $Fe \leq 0.30$; $O \leq 0.25$; and ASTM B 265 Grade 3 titanium has the following contents of chemical elements: $N \leq 0.05$; $C \leq 0.08$; $H \leq 0.015$; $Fe \leq 0.30$; $O \leq 0.35$. Other suitable titanium grades include JIS Class 1, Class 2 or Class 3 titanium (JIS H4630) or titanium of DIN grades DIN3.7025, DIN 3.7035 or DIN 3.7055. JIS Class 1 titanium has the following contents of chemical elements: $N \leq 0.03$; $C \leq 0.08$; $H \leq 0.013$; $Fe \leq 0.20$; $O \leq 0.15$; JIS Class 2 titanium has the following contents of chemical elements: $N \leq 0.03$; $C \leq 0.08$; $H \leq 0.013$; $Fe \leq 0.25$; $O \leq 0.20$; and JIS Class 3 titanium has the following contents of chemical elements: $N \leq 0.05$; $C \leq 0.08$; $H \leq 0.013$; $Fe \leq 0.30$; $O \leq 0.30$. DIN3.7025 titanium has the following contents of chemical elements: $N \leq 0.05$; $C \leq 0.06$; $H \leq 0.013$; $Fe \leq 0.15$; $O \leq 0.12$; DIN3.7035 titanium has the following contents of chemical elements: $N \leq 0.05$; $C \leq 0.06$; $H \leq 0.013$; $Fe \leq 0.20$; $O \leq 0.18$; DIN3.7055 titanium has the following contents of chemical elements: $N \leq 0.05$; $C \leq 0.06$; $H \leq 0.013$; $Fe \leq 0.25$; $O \leq 0.25$.

According to an embodiment, the stainless steel or stainless steel blend and the titanium are provided in weight amounts so as to yield a molar ratio of the elements Ti to Fe of from 0.9 to 1.1, preferably from 0.95 to 1.05, most preferably about 1.0:1.0 in the mixture.

In a further embodiment of the invention, the mixture of stainless steel or stainless steel blend and titanium is melt blended in an inert atmosphere. Preferably the mixture is melt blended in an argon atmosphere. The melting can be performed in an arc melter or any other furnace which can provide temperatures of greater than 1600°C in an inert atmosphere, preferably greater than 1700°C in an inert atmosphere. The melting blending is carried out until all material is completely molten. Optionally, the melting step encompasses multiple melting steps separated by at least partial solidification of the carbon steel and titanium blend.

In an embodiment, the melt blended mixture is cast into at least one ingot cast and allowed to solidify to form at least one TiFe-based alloy ingot.

In order to render the TiFe-based alloy suitable for hydrogen storage it is broken and subsequently milled. Milling can be performed under inert atmosphere. Milling can also be performed under hydrogen atmosphere where the alloy is preactivated.

Activation of the milled alloy occurs under hydrogen atmosphere at elevated pressure and temperature. Suitable hydrogen partial pressures for activation include, for example, 1 MPa to 20 MPa, preferably 2 MPa to 15 MPa, more preferably 5 MPa to 10 MPa. Activation temperatures may range from 25°C up to 200°C, preferably from 40°C up to 150°C, more preferably from 60°C to 100°C. According to an embodiment activation is preceded by subjecting the milled alloy to a vacuum at temperatures ranging from 25°C up to 200°C, preferably from 40°C up to 150°C, more preferably from 60°C to 100°C.

The relationship between pressure, temperature and hydrogen concentration in the metal during hydrogen absorption is determined as a PCI over a range of temperatures. Hydrogen is dissolved in the metal lattice at a certain temperature while increasing the pressure. This process obeys Sieverts' law until a saturation concentration is reached ($\alpha$-phase). Then the concentration in the metal increases without pressure increase; the hydride phase ($\beta$-phase) is formed; that is, hydrogen starts to react with the metal to form the metal hydride and $\alpha$-phase and $\beta$-phase coexist in the alloy. This *"plateau area"* obeys both van't Hoff's law and Gibbs's phase rule. At the end of the plateau, the pressure rises again and hydrogen atoms are dissolved in the hydride phase according to Sieverts' law. The van't Hoff equation is given by:

$$ lnP_{eq} = -\frac{\Delta H}{RT} + \frac{\Delta S}{R} $$

where $P_{eq}$ is the equilibrium plateau pressure, R is the gas constant and T is the reaction temperature.

To compare different hydrides, it has become common to construct van't Hoff diagrams based on the equilibrium values in the PCI diagrams in the middle of the plateau at different temperatures. By plotting 1/T vs. ln($P_{eq}$) both the enthalpy of absorption ($\Delta H_{abs}$) and the entropy ($\Delta S_{abs}$) values can be calculated. The enthalpy of reaction for the hydrogen absorption reaction ($\Delta H_{abs}$) is calculated from the slope of the straight line in the diagram 1/T vs. ln($P_{eq}$). (See V. Kumar et al. "Hydrogen absorption/desorption characteristics of room temperature ZrMn2-xNix system (X = 1.25-1.50)", Bull. Mater. Sci. Vol. 37, 2014, pages 655-660.) In the same manner, the enthalpy of reaction for the hydrogen desorption reaction ($\Delta H_{des}$) is calculated from the slope of the straight line obtained from PCI curves of the hydrogen desorption reaction.

It has been found that the TiFe-based alloys made according to the method of the present invention provide almost identical hydrogen absorption and desorption properties of hydrogen as TiFe-based alloys made with pristine materials. In particular the enthalpies and entropies of absorption and desorption are similar to those of TiFe-based alloys made with pristine materials, however, produced at much lower cost. Furthermore, it has shown that the use of austenitic stainless steel and/or the ferritic stainless steel, and/or a blend of carbon steel with one or both of austenitic stainless steel and/or the ferritic stainless steel leads to improved activation.

According to another embodiment of the invention, scrap steel having a carbon content of lower than 0.1 wt.% can be added to the mixture, provided that the molar ratio of Ti to Fe of from 0.9 to 1.1, preferably from 0.95 to 1.05, most preferably about 1.0:1.0 is maintained in the overall mixture. It has been found that scrap steel having a carbon content of lower than 0.1 wt.% negatively influences the enthalpies and entropies of absorption and desorption of hydrogen. This kind of scrap steel can therefore be added to adjust the absorption and desorption properties to a desired level.

EXAMPLES

The invention will now be described with references to the following examples and appended figures which shall not be limiting.

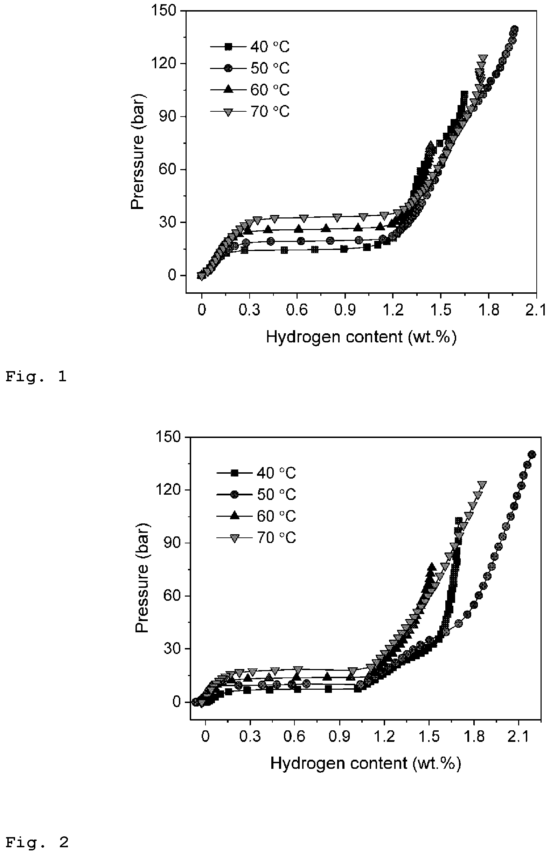

**Figure 1** is a graph illustrating the hydrogen content versus the pressure at different temperatures for the hydrogen absorption of a comparative TiFe-based alloy made from pristine materials.

**Figure 2** is a graph illustrating the hydrogen content versus the pressure at different temperatures for the hydrogen desorption of a comparative TiFe-based alloy made from pristine materials.

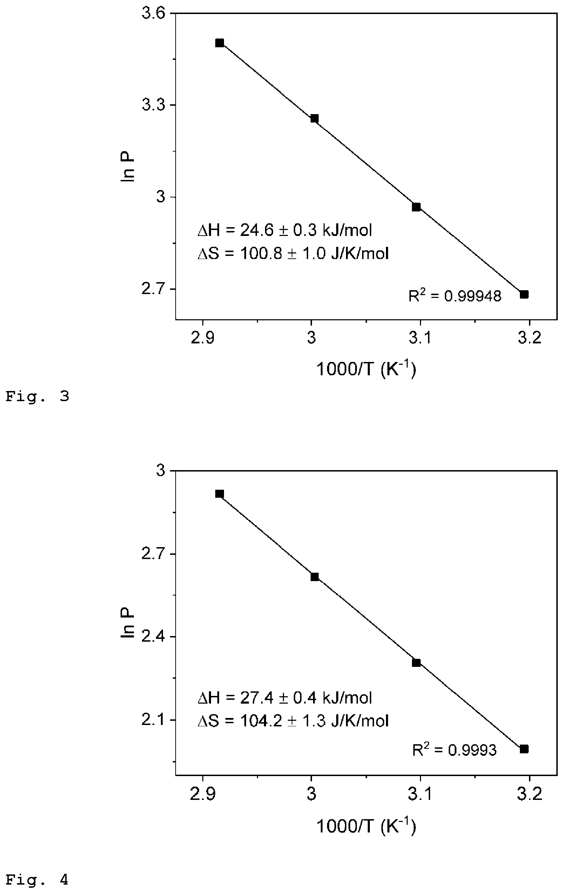

**Figure 3** is a graph illustrating the van't Hoff diagram prepared from the data shown in Figure 1 using a linear fit.

**Figure 4** is a graph illustrating the van't Hoff diagram prepared from the data shown in Figure 2 using a linear fit.

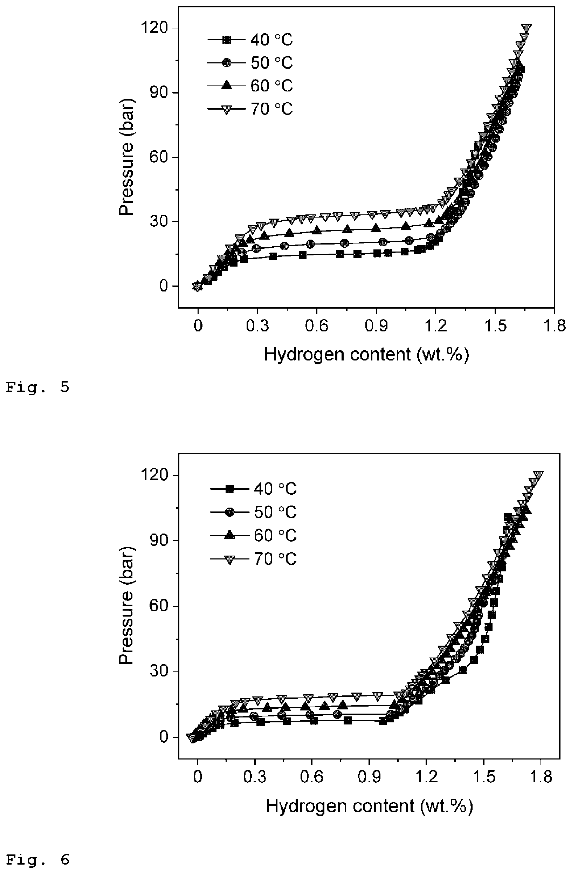

**Figure 5** is a graph illustrating the hydrogen content versus the pressure at different temperatures for the hydrogen absorption of a TiFe-based alloy according to the invention made from steel scrap of grade C45 (EN 10083-2:1991) and Grade 2 titanium waste.

**Figure 6** is a graph illustrating the hydrogen content versus the pressure at different temperatures for the hydrogen desorption of TiFe-based alloy according to the invention made from steel scrap of grade C45 (EN 10083-2:1991) and Grade 2 titanium waste.

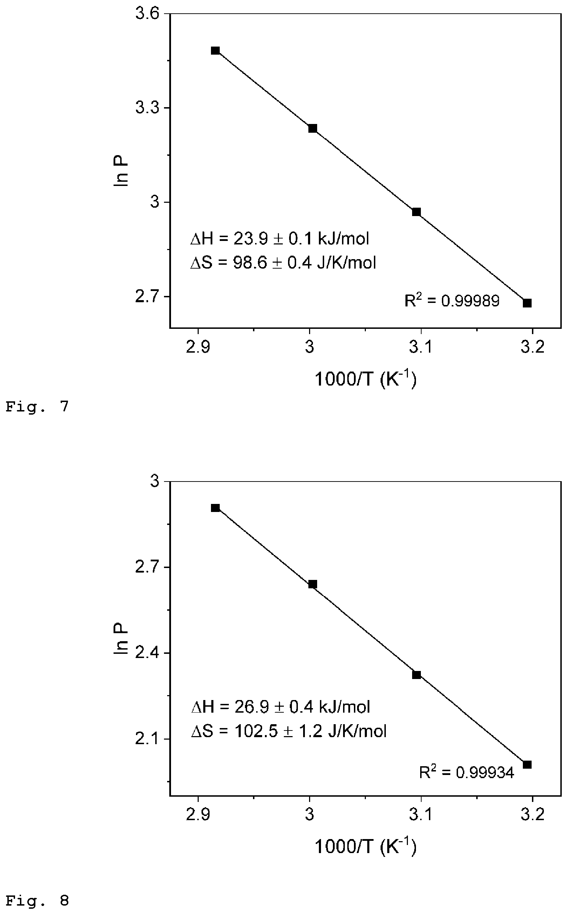

**Figure 7** is a graph illustrating the van't Hoff diagram prepared from the data shown in Figure 5 using a linear fit.

**Figure 8** is a graph illustrating the van't Hoff diagram prepared from the data shown in Figure 6 using a linear fit.

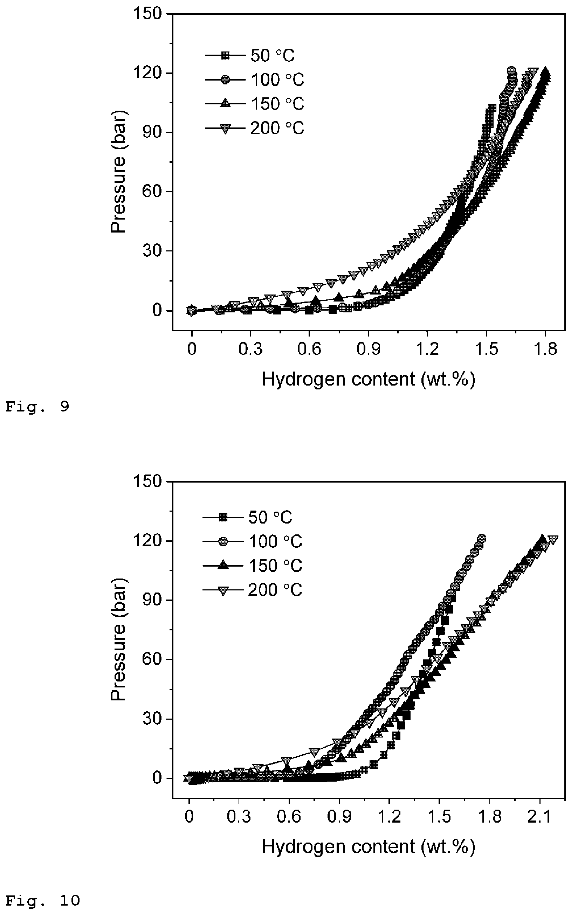

**Figure 9** is a graph illustrating the hydrogen content versus the pressure at different temperatures for the hydrogen absorption of a comparative TiFe-based alloy made from steel scrap of grade 316L (UNS S31600/S31603) and Grade 2 titanium waste.

**Figure 10** is a graph illustrating the hydrogen content versus the pressure at different temperatures for the hydrogen desorption of a comparative TiFe-based alloy made from steel scrap of grade 316L (UNS S31600/S31603) and Grade 2 titanium waste.

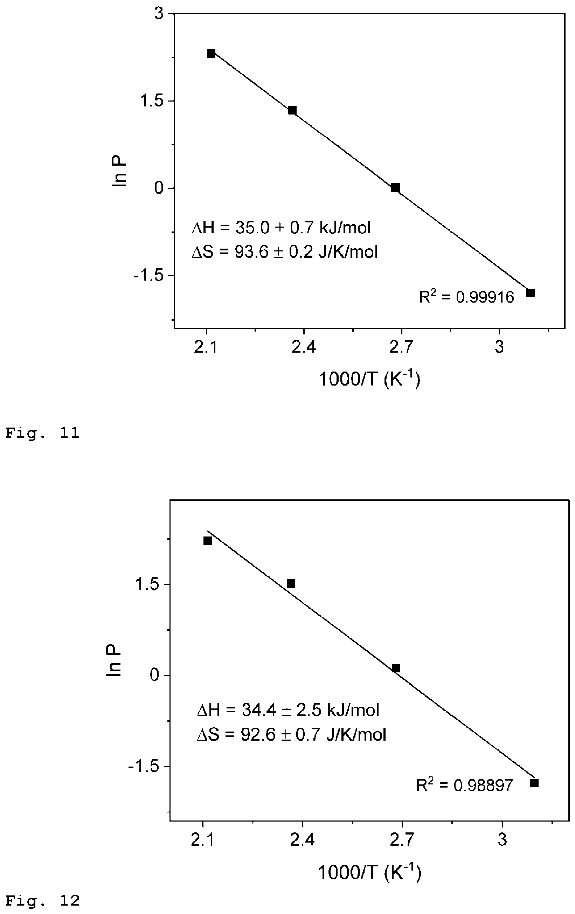

**Figure 11** is a graph illustrating the van't Hoff diagram prepared from the data shown in Figure 9 using a linear fit.

**Figure 12** is a graph illustrating the van't Hoff diagram prepared from the data shown in Figure 10 using a linear fit.

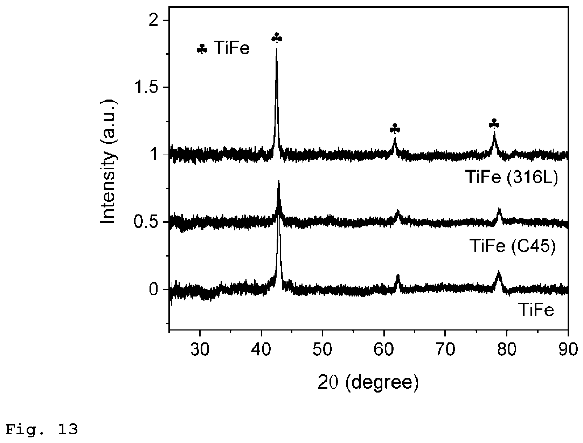

**Figure 13** is a graph illustrating the XRD spectra of TiFe alloys made from pristine materials, from TiFe-based alloy according to the invention made from steel scrap of grade C45 (EN 10083-2:1991), and from steel scrap of grade 316L (UNS S31600/S31603), respectively.

**Figure 14** is a graph illustrating activation curves of waste TiFe(C45) and waste TiFe(316L) and pristine FeTi alloys at 50°C and under 65 bar of $H_2$, wherein **Figure 14a** illustrates activation curves of all three samples after being evacuated at 90°C for 15 h - after the first activation process in **a** the pure and waste TiFe(C45) alloys were not fully activated, so the two samples were evacuated for an extra 3 h - and **Figure 14b** illustrates activation curves of the pristine and waste TiFe(C45) FeTi alloys after an extra evacuation (3 h) at 90°C.

Single metal scraps of C45 steel, 316L steel, and 3.7035 Titanium Grade 2 were arc melted in an inert atmosphere to form metal ingots, which were then used to create TiFe-based alloys using the Arc Melting technique as follows: A total of 4 g of raw materials were placed in an Edmund Buhler MAM-1 arc melter. After applying a dynamic vacuum (1.0 MPa to 2.0 MPa) for about 15 minutes, the residual oxygen present in the melting chamber of the arc melter was removed by multiple meltings of a Ti ingot. Subsequently, the inserted sample containing an atomic ratio of Fe and Ti 1.0:1.0 was melted at least five times to ensure high compositional homogeneity. The obtained ingot was shaped into an ingot of 3 mm in diameter and 30 mm in length via suction-casting. The obtained TiFe ingot was transferred into an argon-filled glove-box, with a circulation purifier controller to keep $O_2$ and $H_2O$ levels lower than 1 ppm so as to minimize oxidation and degradation of the material. Prior to checking the hydrogen sorption properties, the obtained alloys were hand crushed and then sifted through a 125 $\mu$m sieve.

The crushed and sifted TiFe based alloys were activated in a Sievert's type apparatus via the multi-step process described in the following:

Pure TiFe (reference system): 90°C dynamic vacuum for 15h -> 6.5 MPa $H_2$ pressure for 18h (not activated) -> 90°C dynamic vacuum for 3h -> 6.5 MPa $H_2$ pressure for 20h (activated) -> 10 hydrogenation/dehydrogenation cycles: 6.0 to 6.5 MPa for absorption; and 0.1 MPa for desorption.

Waste TiFe (C45): 90°C dynamic vacuum for 15h -> 6.5 MPa $H_2$ pressure for 18h (not activated) -> 90°C dynamic vacuum for 3h -> 6.5 MPa $H_2$ pressure for 50h (activated) -> 10 hydrogenation/dehydrogenation cycles: 6.0 to 6.5 MPa for absorption; and 0.1 MPa for desorption.

Waste TiFe (316L): 90°C dynamic vacuum for 15h -> 6.5 MPa $H_2$ pressure for 3h (activated) -> 10 hydrogenation/dehydrogenation cycles: 6.0 to 6.5 MPa for absorption; and 0.1 MPa for desorption.

The hydrogen storage properties of the activated materials were characterized via XRD and volumetric techniques.

The volumetric analyses led to the hydrogen absorption and desorption properties shown in Table 1 below:

**Table 1:** enthalpies and entropies of absorption and desorption

| Composition | Process | Enthalpy (kJ/mol) | Entropy (J/K/mol) |
|---|---|---|---|
| Pure TiFe | Absorption | 24.6 ± 0.3 | 100.8 ± 1.0 |
| | Desorption | 27.4 ± 0.4 | 104.2 ± 1.3 |
| Waste TiFe (C45) | Absorption | 23.9 ± 0.1 | 98.6 ± 0.4 |
| | Desorption | 26.9 ± 0.4 | 102.5 ± 1.2 |
| Waste TiFe (316L) | Absorption | 35.0 ± 0.7 | 93.6 ± 0.2 |
| | Desorption | 34.4 ± 2.5 | 92.6 ± 0.7 |

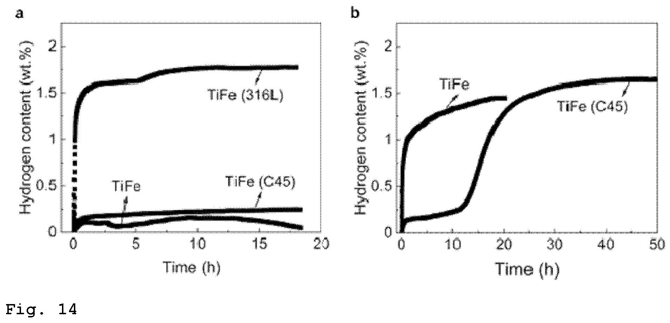

In particular **Figure 14a** shows a surprisingly improved activation for hydrogen absorption compared to TiFe alloys made of pristine materials and even compared to those using C45 waste materials.

**Claims**

1. A method for producing TiFe-based alloys which are useful for hydrogen storage applications comprising the steps of:

   providing a mixture of an austenitic stainless steel and/or a ferritic stainless steel, wherein the stainless steel has an iron content of at most 85 wt.%, a nickel content from about 5 wt.% to about 15 wt.% and a chromium content of about 10 wt.% to about 20 wt.%,
   and titanium, wherein the titanium is selected from the group consisting of ASTM B 265 Grade 2 titanium having the following contents of chemical elements: N ≤ 0.03; C ≤ 0.08; H ≤ 0.015; Fe ≤ 0.30; O ≤ 0.25; ASTM B 265 Grade 3 titanium having the following contents of chemical elements: N ≤ 0.05; C ≤ 0.08; H ≤ 0.015; Fe ≤ 0.30; O ≤ 0.35; JIS Class 2 titanium having the following contents of chemical elements: N ≤ 0.03; C ≤ 0.08; H ≤ 0.013; Fe ≤ 0.25; O ≤ 0.20; JIS Class 3 titanium having the following contents of chemical elements: N ≤ 0.05; C ≤ 0.08; H ≤ 0.013; Fe ≤ 0.30; O ≤ 0.30. DIN3.7025 titanium having the following contents of chemical elements: N ≤ 0.05; C ≤ 0.06; H ≤ 0.013; Fe ≤ 0.15; O ≤ 0.12; DIN3.7035 titanium having the following contents of chemical elements: N ≤ 0.05; C ≤ 0.06; H ≤ 0.013; Fe ≤ 0.20; O ≤ 0.18; and DIN3.7055 titanium having the following contents of chemical elements: N ≤ 0.05; C ≤ 0.06; H ≤ 0.013; Fe ≤ 0.25; O ≤ 0.25,
   in a weight ratio of carbon steel to titanium so as to yield a molar ratio of Ti to Fe of from 0.9 to 1.1, preferably from 0.95 to 1.05, most preferably about 1.0:1.0 in the mixture;
   melt blending the mixture in an inert atmosphere;
   casting the molten mixture into at least one ingot cast; solidifying the melt blended mixture to form at least one TiFe-based alloy ingot.

2. The method of claim 1 further comprising the step of crushing and sifting the at least one TiFe-based alloy ingots to form pulverized TiFe-based alloy which is useful for hydrogen storage applications.

3. The method of claim 1 or claim 2 further comprising the step of activating the TiFe-based alloy under hydrogen atmosphere at elevated pressure and temperature.

4. The method of claim 3 wherein activation is performed at a hydrogen partial pressure from 1 MPa to 20 MPa and at a temperature from 25°C up to 200°C.

5. The method of claim 4 wherein activation is performed at a hydrogen partial pressure from 5 MPa to 10 MPa and at a temperature from 60°C up to 100°C.

6. The method of any one of the previous claims wherein activation is preceded by subjecting the sifted alloy to a vacuum at temperatures ranging from 25°C up to 200°C.

7. The method of any of the previous claims wherein the austenitic stainless steel is chosen from the AISI 300 series.

8. The method of any one of the previous claims wherein the steel is selected from the group consisting of AISI steel grades 301, 304, 304L, 303, 321, 316, 316L, and 316Ti.

9. The method of any one of the previous claims wherein also scrap steel having a carbon content of lower than 0.1 wt.%

is added to the mixture.

10. The method of any one of the previous claims wherein the weight amounts of titanium and steel are selected to yield a molar ratio of Ti to Fe of from 0.95 to 1.05 in the overall mixture.

11. The method of any one of the previous claims wherein the weight amounts of titanium and steel are selected to yield a molar ratio of Ti to Fe about 1.0:1.0 in the overall mixture.

12. The method of any one of the previous claims wherein the stainless steel is a scrap steel.

13. The method of any one of the previous claims wherein the austenitic stainless steel and/or the ferritic stainless steel is used as a blend with carbon steel, preferably carbon steel scrap, wherein the total iron content in the blend of austenitic stainless steel and/or the ferritic stainless steel with carbon steel is lower than 97 wt.%, preferably lower than 95 wt.%, more preferably lower than 90 wt.%, such as lower than 85 wt.% or lower than 75 wt.%, based on the total weight of the blend.

**Patentansprüche**

1. Verfahren zur Herstellung von TiFe-basierten Legierungen, die für Wasserstoffspeicheranwendungen geeignet sind, umfassend:

   Bereitstellen, einer Mischung aus einem austenitischen Edelstahl und/oder einem ferritischen Edelstahl, wobei der Edelstahl einen Eisengehalt von höchstens 85 Gew.-%, einen Nickelgehalt von etwa 5 Gew.-% bis etwa 15 Gew.-% und einen Chromgehalt von etwa 10 Gew.-% bis etwa 20 Gew.-% aufweist,
   und Titan, wobei das Titan aus der Gruppe ausgewählt ist, bestehend aus Titan der Güteklasse 2 gemäß ASTM B 265 mit den folgenden Gehalten an chemischen Elementen: N ≤ 0,03; C ≤ 0,08; H ≤ 0,015; Fe ≤ 0,30; O ≤ 0,25; Titan der Güteklasse 3 gemäß ASTM B 265 mit folgenden Gehalten an chemischen Elementen: N ≤ 0,05; C ≤ 0,08; H ≤ 0,015; Fe ≤ 0,30; O ≤ 0,35; Titan der Klasse 2 gemäß JIS mit folgenden Gehalten an chemischen Elementen: N ≤ 0,03; C ≤ 0,08; H ≤ 0,013; Fe ≤ 0,25; O ≤ 0,20; Titan der Klasse 3 gemäß JIS mit folgenden Gehalten an chemischen Elementen: N ≤ 0,05; C ≤ 0,08; H ≤ 0,013; Fe ≤ 0,30; O ≤ 0,30. Titan gemäß DIN 3.7025 mit folgenden Gehalten an chemischen Elementen: N ≤ 0,05; C ≤ 0,06; H ≤ 0,013; Fe ≤ 0,15; O ≤ 0,12; Titan gemäß DIN 3.7035 mit folgenden Gehalten an chemischen Elementen: N ≤ 0,05; C ≤ 0,06; H ≤ 0,013; Fe ≤ 0,20; O ≤ 0,18; und Titan gemäß DIN 3.7055 mit folgenden Gehalten an chemischen Elementen: N ≤ 0,05; C ≤ 0,06; H ≤ 0,013; Fe ≤ 0,25; O ≤ 0,25,
   in einem Gewichtsverhältnis von Kohlenstoffstahl zu Titan, um ein Molverhältnis von Ti zu Fe von 0,9 bis 1,1, bevorzugt von 0,95 bis 1,05, am bevorzugtesten von etwa 1,0:1,0 in der Mischung zu erzielen;
   Schmelzmischen der Mischung in einer inerten Atmosphäre;
   Gießen der geschmolzenen Mischung in mindestens einen Blockguss;
   Verfestigen der geschmolzenen Mischung, um mindestens einen TiFe-basierten Legierungsblock zu bilden.

2. Verfahren nach Anspruch 1, weiterhin umfassend: Zerkleinern und Sieben des mindestens einen TiFe-basierten Legierungsblocks, um eine pulverisierte TiFe-basierte Legierung zu bilden, die für Wasserstoffspeicheranwendungen geeignet ist.

3. Verfahren nach Anspruch 1 oder Anspruch 2, weiterhin umfassend: Aktivieren der TiFe-basierten Legierung unter Wasserstoffatmosphäre bei erhöhtem Druck und erhöhter Temperatur.

4. Verfahren nach Anspruch 3, wobei die Aktivierung bei einem Wasserstoffpartialdruck von 1 MPa bis 20 MPa und bei einer Temperatur von 25 °C bis 200 °C durchgeführt wird.

5. Verfahren nach Anspruch 4, wobei die Aktivierung bei einem Wasserstoffpartialdruck von 5 MPa bis 10 MPa und bei einer Temperatur von 60 °C bis 100 °C durchgeführt wird.

6. Verfahren nach einem der vorhergehenden Ansprüche, wobei der Aktivierung vorausgeht, dass die gesiebte Legierung bei Temperaturen im Bereich von 25 °C bis 200 °C einem Vakuum ausgesetzt wird.

7. Verfahren nach einem der vorhergehenden Ansprüche, wobei der austenitische Edelstahl aus der AISI 300-Serie ausgewählt ist.

8. Verfahren nach einem der vorhergehenden Ansprüche, wobei der Stahl aus der Gruppe ausgewählt ist, bestehend aus AISI-Stahlsorten 301, 304, 304L, 303, 321, 316, 316L und 316Ti.

9. Verfahren nach einem der vorhergehenden Ansprüche, wobei der Mischung auch Stahlschrott mit einem Kohlenstoffgehalt von weniger als 0,1 Gew.-% zugesetzt wird.

10. Verfahren nach einem der vorhergehenden Ansprüche, wobei die Gewichtsanteile von Titan und Stahl so gewählt werden, dass sich ein Molverhältnis von Ti zu Fe von 0,95 bis 1,05 in der Gesamtmischung ergibt.

11. Verfahren nach einem der vorhergehenden Ansprüche, wobei die Gewichtsanteile von Titan und Stahl so gewählt werden, dass sich in der Gesamtmischung ein Molverhältnis von Ti zu Fe von etwa 1,0:1,0 ergibt.

12. Verfahren nach einem der vorhergehenden Ansprüche, wobei der rostfreie Stahl Stahlschrott ist.

13. Verfahren nach einem der vorhergehenden Ansprüche, wobei der austenitische Edelstahl und/oder der ferritische Edelstahl als Mischung mit Kohlenstoffstahl, vorzugsweise Kohlenstoffstahlschrott, verwendet wird, wobei der Gesamt-Eisengehalt in der Mischung aus austenitischem Edelstahl und/oder ferritischem Edelstahl mit Kohlenstoffstahl weniger als 97 Gew.-%, bevorzugt weniger als 95 Gew.-%, noch bevorzugter weniger als 90 Gew.-% beträgt, wie beispielsweise weniger als 85 Gew.-% oder weniger als 75 Gew.-%, bezogen auf das Gesamtgewicht der Mischung.

**Revendications**

1. Procédé de production d'alliages à base de TiFe qui sont utiles pour des applications de stockage d'hydrogène, comprenant les étapes consistant à :

   fournir un mélange d'un acier inoxydable austénitique et/ou d'un acier inoxydable ferritique, dans lequel l'acier inoxydable présente une teneur en fer d'au plus 85 % en poids, une teneur en nickel d'environ 5 % en poids à environ 15 % en poids et une teneur en chrome d'environ 10 % en poids à environ 20 % en poids,
   et de titane, le titane étant choisi dans le groupe constitué de titane de grade 2, ASTM B 265, présentant les teneurs suivantes en éléments chimiques : $N \leq 0,03$ ; $C \leq 0,08$ ; $H \leq 0,015$ ; $Fe \leq 0,30$ ; $O \leq 0,25$ ; titane de grade 3, ASTM B 265, présentant les teneurs suivantes en éléments chimiques : $N \leq 0,05$ ; $C \leq 0,08$ ; $H \leq 0,015$ ; $Fe \leq 0,30$ ; $O \leq 0,35$ ; titane JIS de classe 2 présentant les teneurs suivantes en éléments chimiques : $N \leq 0,03$ ; $C \leq 0,08$ ; $H \leq 0,013$ ; $Fe \leq 0,25$ ; $O \leq 0,20$ ; titane JIS de classe 3 présentant les teneurs suivantes en éléments chimiques : $N \leq 0,05$ ; $C \leq 0,08$ ; $H \leq 0,013$ ; $Fe \leq 0,30$ ; $O \leq 0,30$ ; titane DIN3.7025 présentant les teneurs suivantes en éléments chimiques : $N \leq 0,05$ ; $C \leq 0,06$ ; $H \leq 0,013$ ; $Fe \leq 0,15$ ; $O \leq 0,12$ ; titane DIN3.7035 présentant les teneurs suivantes en éléments chimiques : $N \leq 0,05$ ; $C \leq 0,06$ ; $H \leq 0,013$ ; $Fe \leq 0,20$ ; $O \leq 0,18$ ; et titane DIN3.7055 présentant les teneurs suivantes en éléments chimiques : $N \leq 0,05$ ; $C \leq 0,06$ ; $H \leq 0,013$ ; $Fe \leq 0,25$ ; $O \leq 0,25$,
   selon un rapport pondéral de l'acier au carbone au titane de manière à obtenir un rapport molaire de Ti à Fe de 0,9 à 1,1, de préférence de 0,95 à 1,05, de la manière la plus préférée d'environ 1,0:1,0 dans le mélange ;
   faire fondre en mélangeant le mélange dans une atmosphère inerte ;
   couler le mélange fondu dans au moins un lingot coulé ; solidifier le mélange mélangé fondu pour former au moins un lingot d'alliage à base de TiFe.

2. Procédé selon la revendication 1, comprenant en outre les étapes consistant à broyer et à tamiser les au moins un lingot d'alliage à base de TiFe pour former un alliage pulvérisé à base de TiFe qui est utile pour des applications de stockage d'hydrogène.

3. Procédé selon la revendication 1 ou revendication 2, comprenant en outre l'étape consistant à activer l'alliage à base de TiFe sous atmosphère d'hydrogène à pression et température élevées.

4. Procédé selon la revendication 3, dans lequel l'activation est effectuée à une pression partielle d'hydrogène de 1 MPa à 20 MPa et à une température de 25°C à 200°C.

5. Procédé selon la revendication 4, dans lequel l'activation est effectuée à une pression partielle d'hydrogène de 5 MPa à 10 MPa et à une température de 60°C à 100°C.

**6.** Procédé selon l'une quelconque des revendications précédentes, dans lequel l'activation est précédée par la soumission de l'alliage tamisé à un vide à des températures allant de 25°C à 200°C.

**7.** Procédé selon l'une quelconque des revendications précédentes, dans lequel l'acier inoxydable austénitique est choisi parmi la série AISI 300.

**8.** Procédé selon l'une quelconque des revendications précédentes, dans lequel l'acier est choisi dans le groupe consistant en des grades d'acier AISI 301, 304, 304L, 303, 321, 316, 316L, et 316Ti.

**9.** Procédé selon l'une quelconque des revendications précédentes, dans lequel de la ferraille d'acier est également ajoutée au mélange, présentant une teneur en carbone inférieure à 0,1 % en poids.

**10.** Procédé selon l'une quelconque des revendications précédentes, dans lequel les quantités pondérales de titane et d'acier sont sélectionnées pour donner un rapport molaire de Ti à Fe de 0,95 à 1,05 dans le mélange global.

**11.** Procédé selon l'une quelconque des revendications précédentes, dans lequel les quantités pondérales de titane et d'acier sont sélectionnées pour donner un rapport molaire de Ti à Fe d'environ 1,0:1,0 dans le mélange global.

**12.** Procédé selon l'une quelconque des revendications précédentes, dans lequel l'acier inoxydable est de la ferraille d'acier.

**13.** Procédé selon l'une quelconque des revendications précédentes, dans lequel l'acier inoxydable austénitique et/ou l'acier inoxydable ferritique est utilisé en tant que mélange avec de l'acier au carbone, de préférence de la ferraille d'acier au carbone, dans lequel la teneur totale en fer dans le mélange d'acier inoxydable austénitique et/ou d'acier inoxydable ferritique avec de l'acier au carbone est inférieure à 97 % en poids, de préférence inférieure à 95 % en poids, de manière plus préférée inférieure à 90 % en poids, comme inférieure à 85 % en poids ou inférieure à 75 % en poids, sur la base du poids total du mélange.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S56136957 A

**Non-patent literature cited in the description**

- **J.J. REILLY ; R.H. WISWALL**. Formation and properties of iron titanium hydride. *Inorganic Chemistry*, 1974, vol. 13, 218-222
- **G. SANDROCK**. A panoramic overview of hydrogen storage alloys from a gas reaction point of view. *Journal of Alloys and Compounds*, 1999, vol. 293-295, 877-888
- **A.K. PATEL et al.** Effect of annealing on microstructure and hydrogenation properties of TiFe + X wt% Zr (X = 4, 8). *International Journal of Hydrogen Energy*, vol. 43, 6238-6243
- **P.A. KUMAR et al.** effect of annealing on microstructure and hydrogenation properties of TiFe + X wt.% Zr (X = 4, 8). *International Journal of Hydrogen Energy*, 2018, vol. 43 (12), 6238-6243
- **M. WAFEEQ et al.** Influence of oxygen introduced in TiFe-based hydride forming alloy on its morphology, structural and hydrogen sorption properties. *International Journal of Hydrogen Energy*, vol. 37 (20212), 18155-18162
- **V. KUMAR et al.** Hydrogen absorption/desorption characteristics of room temperature ZrMn2-xNix system (X = 1.25-1.50)''. *Bull. Mater. Sci.*, 2014, vol. 37, 655-660